# EUROPEAN PATENT APPLICATION

(11) **EP 4 852 076 A1**
(43) Date of publication of application: **09.12.2026**
(21) Application number: 25882844.1
(22) Date of filing: 18.09.2025
(51) Int. Cl.: H01M 4/131, H01M 4/505, H01M 4/525, H01M 4/36, H01M 10/052, H01M 4/02

(54) **ELECTRODE FOR SECONDARY BATTERY COMPRISING OVER-LITHIATED MANGANESE-BASED OXIDE, AND LITHIUM SECONDARY BATTERY COMPRISING SAME**

(30) Priority: 21.10.2024 KR 20240143603; 17.09.2025 KR 20250133260
(71) Applicant: LG Energy Solution, Ltd., Seoul 07335 (KR)
(72) Inventor: LEE, Jeayoung, Daejeon 34122 (KR); HAN, Gi Beom, Daejeon 34122 (KR); LEE, Youshin, Daejeon 34122 (KR); KIM, Minjeong, Daejeon 34122 (KR); PARK, Hyunyoung, Daejeon 34122 (KR); PARK, Sin Young, Daejeon 34122 (KR); LIM, Hyungwoo, Daejeon 34122 (KR); JEONG, Yeaji, Daejeon 34122 (KR)
(74) Representative: Hoffmann Eitle
(86) International application number: PCT/KR2025/014511
(87) International publication number: WO 2026/089302

(57) **Abstract**

According to an embodiment of the present disclosure, provided is an electrode for a secondary battery, comprising an electrode current collector, and an electrode layer formed on one surface or both surfaces of the electrode current collector,
wherein the electrode layer comprises a lithium-based active material including a lithium-rich manganese-based oxide in which a molar ratio of lithium to a transition metal excluding lithium is more than 1 and a molar content of manganese in the transition metal is 50 mol% or more; and a coating layer formed on the surface of the lithium-rich manganese-based oxide, and
wherein the coating layer contains Co in an amount of 3,000 ppm to 8,000 ppm based on the total weight of the lithium-based active material, and a lithium secondary battery comprising the same.

## Description

### TECHNICAL FIELD

### Cross Citation with Related Application(s)

This application claims priority to and the benefit of Korean Patent Application No. 10-2024-0143603, filed on October 21, 2024, and Korean Patent Application No. 10-2025-0133260, filed on September 17, 2025, the disclosures of which are incorporated herein by reference in their entirety.

The present disclosure relates to an electrode for a secondary battery comprising a lithium-rich manganese-based oxide, and a lithium secondary battery comprising the same.

### BACKGROUND

Recently, as the application area of lithium secondary batteries has rapidly been extended not only to supply power for electronic devices such as electricity, electronics, communication, and computers, but also to power storage and supply for large-area devices such as automobiles and power storage systems, demand for secondary batteries that have high capacity, high output and high stability is increasing.

The lithium secondary battery generally consists of a positive electrode containing a positive electrode active material, a negative electrode containing a negative electrode active material, an electrolyte that serves as a medium for transferring lithium ions, and a separator. In this case, carbon-based active materials, silicon-based active materials, and the like can be used as the negative electrode active material. Furthermore, lithium transition metal oxides such as lithium cobalt oxide(LiCoO₂), lithium nickel oxide(LiNiO₂), and lithium nickel-cobalt-manganese composite oxide can be used as the positive electrode active material.

Meanwhile, lithium-rich manganese-based oxides have recently attracted attention as next-generation positive electrode active materials. Lithium-rich manganese-based oxides have a lower cobalt (Co) content and increased content of manganese(Mn) which is relatively inexpensive and has bountiful reserves, which provide the advantages of reducing costs and enabling a greater amount of lithium to be utilized, thus having a high capacity of 250 mAh/g or more.

In the case of lithium-rich manganese-based oxide, it has a structure in which layered phase (LiM'O₂) and rock-salt phase (Li₂MnO₃) are mixed. During the initial activation process, the rock-salt phase is activated and excessive lithium ions are generated, so that the irreversible capacity of the negative electrode may be compensated. Consequently, it can be balanced with a silicon-based negative electrode without the need for a separate compensation material, such as a sacrificial positive electrode material, or a prior lithium compensation process, such as pre-lithiation.

However, the lithium-rich manganese-based oxide has more pores within the active material particles and lower particle density compared to lithium nickel cobalt manganese oxide having a high nickel content, and thus are more prone to particle breakage at the same pressure, which limits porosity control.

Therefore, the lithium-rich manganese-based oxide requires technological development that can improve its rolling characteristics.

### DETAILED DESCRIPTION OF THE INVENTION

### Technical Problem

It is an object of the present disclosure to provide an electrode comprising an active material that can improve rolling characteristics by increasing particle strength and reducing the occurrence ratio of particle breakage during target rolling of the same porosity, and a lithium secondary battery comprising the same.

### Technical Solution

According to an aspect of the present disclosure, provided is an electrode for a secondary battery, comprising an electrode current collector, and an electrode layer formed on one surface or both surfaces of the electrode current collector,
wherein the electrode layer comprises a lithium-based active material including a lithium-rich manganese-based oxide in which a molar ratio of lithium to a transition metal excluding lithium is more than 1 and a molar content of manganese in the transition metal is 50 mol% or more; and a coating layer formed on the surface of the lithium-rich manganese-based oxide, and
wherein the coating layer contains Co in an amount of 3,000 ppm to 8,000 ppm based on the total weight of the lithium-based active material.

Here, the Co content of the coating layer may be 3300 ppm to 6600 ppm based on the total weight of the lithium-based active material.

Specifically, the coating layer may comprise one or more materials selected from the group consisting of Co metal, Co oxide, and lithium cobalt oxide.

The lithium-rich manganese-based oxide may be represented by the following Formula 1.

[Formula 1] LiₐNi_{b}Co_{c}Mn_{d}MₑO_{2+f}

wherein, 1.12≤a≤1.18, 1.1≤a/(b+c+d)≤1.5, 0.24≤b≤0.36, 0≤c≤0.1, 0.47≤d<0.63, 0≤e≤0.05, 0≤f≤0.05, b+c+d+e=1, and M is at least one selected from the group consisting of Al, B, Co, Fe, Cr, Cu, W, Mg, V, Ti, Zn, Ga, In, Ru, Nb, Sn, Sr and Zr.

Further, the lithium-rich manganese-based oxide may be a secondary particle having a structure in which primary particles are agglomerated, and the coating layer may be formed on both a surface of the primary particle and a surface of the secondary particle.

Specifically, the coating layer may be distributed within a thickness of 20 nm to 100 nm from the surface of the primary particle based on the primary particle, and may be distributed within a thickness of 3 µm or less from the surface of the secondary particle based on the secondary particle.

Here, the average diameter (D50) of the secondary particle may be 5 to 10 µm.

On the other hand, the content of particles of the lithium-based active material having a diameter of 1 µm or less in the electrode layer may be 2.5 vol.% or less based on the total volume of the lithium-based active material.

Moreover, the particle breaking strength of the lithium-based active material may be 1.4 mN to 2.0 mN, and the roundness of the lithium-based active material may be 0.7 to 0.8.

Further, the porosity of the electrode layer may be 20 to 40 vol.%.

According to another aspect of the present disclosure, provided is a lithium secondary battery comprising the electrode.

### BRIEF DESCRIPTION OF THE DRAWINGS

FIG. 1 is an XPS analysis graph that can measure the Co content of the coating layer according to Experimental Example 1 to determine the coating depth.
FIG. 2 is a particle breaking strength analysis graph according to Experimental Example 2.
FIG. 3 is a SEM photograph of a cross section of the electrode of Example 1 according to Experimental Example 3.
FIG. 4 is a SEM photograph of a cross section of the electrode Example 2 according to Experimental Example 3.
FIG. 5 is a SEM photograph of a cross section of the electrode Comparative Example 1 according to Experimental Example 3.
FIG. 6 is a diameter distribution graph of the active material before the formation of the electrode layer according to Experimental Example 4.
FIG. 7 is a diameter distribution graph of the active material after the formation of the electrode layer according to Experimental Example 4.
FIG. 8 is a graph showing roundness measurements according to Experimental Example 5.
FIG. 9 is a graph showing voltage changes due to charge/discharge according to Experimental Example 6.
FIG. 10 is a graph showing voltage changes due to 0.1C charge/discharge according to Experimental Example 7.
FIG. 11 is a graph showing voltage changes due to 0.33C charge/discharge according to Experimental Example 7.

### DETAILED DESCRIPTION OF THE EMBODIMENTS

Hereinafter, the present disclosure will be described in more detail to provide a better understanding of the present disclosure.

The terms used herein are provided to describe exemplary embodiments and are not intended to limit the inventive concept. The singular forms include plural forms unless the context clearly indicates otherwise.

Throughout the descriptions herein, when a certain part "includes" a component, this does not indicate that the certain part excludes other components, but indicates that the part may further include other components, unless otherwise defined.

Furthermore, throughout the descriptions herein, the defined "(average) diameter", " roundness", etc., are based on values measured after performing rolling so that the porosity of the electrode layer of the electrode according to the present disclosure is about 20 to 40 vol.%.

### Electrode

An electrode for a secondary battery according to an embodiment of the present disclosure is an electrode for a secondary battery, comprising an electrode current collector, and an electrode layer formed on one surface or both surfaces of the electrode current collector,
wherein the electrode layer comprises a lithium-based active material including a lithium-rich manganese-based oxide in which a molar ratio of lithium to a transition metal excluding lithium is more than 1 and a molar content of manganese in the transition metal is 50 mol% or more; and a coating layer formed on the surface of the lithium-rich manganese-based oxide, and
wherein the coating layer contains 3,000 ppm to 8,000 ppm of Co based on the total weight of the lithium-based active material.

As described above, the lithium-rich manganese-based oxide represented by Formula 1 exhibits low particle density and is prone to particle breakage as previously described, which consequently limits the ability to increase electrode density. Therefore, the present inventors have conduced in-depth research and as a result, have found that when a coating layer containing a specific amount of Co is formed on the surface of the lithium-rich manganese-based oxide, the particle strength can be improved, thereby completing this invention.

Here, the coating layer may contain Co in an amount of 3,000 ppm to 8,000 ppm, particularly 3,000 ppm to 7,000 ppm, and more particularly 3,300 ppm to 6,600 ppm, based on the total weight of the lithium-based active material, as described above

If the Co content falls outside the above range and is less than 3000 ppm or exceeds 8000 ppm, the particle strength effect derived from the formation of the coating layer cannot be sufficiently achieved, or it is also not preferable from the viewpoint of capacity or energy density.

This coating layer may include one or more materials selected from the group consisting of Co metal, Co oxide, and lithium cobalt oxide. Specifically, the lithium cobalt-based material, which contains both Li and Co together with one or more materials selected from the group consisting of the Co metal and Co oxide, may be an oxide, phosphate, hydroxide, or the like, or may be a salt in the form of a sulfate, nitrate, acetate, carbonate, oxalate, citrate, halide, hydroxide, or oxyhydroxide containing Co.

However, even in this case, one or more materials selected from the group consisting of the Co metal, Co oxide, and lithium cobalt oxide may be included in an amount of 50 wt.% or more, particularly 70 wt.% or more, and more particularly 80 wt.% or more, based on the total weight of the coating layer.

Meanwhile, the lithium-rich manganese-based oxide may be represented by the following Formula 1.

[Formula 1] LiₐNi_{b}Co_{c}Mn_{d}MₑO_{2+f}

wherein, 1.12≤a≤1.18, 1.1≤a/(b+c+d)≤1.5, 0.24≤b≤0.36, 0≤c≤0.1, 0.47≤d<0.63, 0≤e≤0.05, 0≤f≤0.05, b+c+d+e=1, and M is at least one selected from the group consisting of Al, B, Co, Fe, Cr, Cu, W, Mg, V, Ti, Zn, Ga, In, Ru, Nb, Sn, Sr and Zr.

In the above formula, specifically, 1.2≤a/(b+c+d)≤1.5, and 0.5≤d<0.63, and more specifically, 1.2≤a/(b+c+d)≤1.4, and 0.55≤d<0.6.

The lithium-rich manganese-based oxide may be a secondary particle having a structure in which primary particles are agglomerated.

Here, the primary particle may be a single crystal particle, and the secondary particle means a physical agglomerate of hundreds to thousands of primary particles.

The average diameter (D50) of the primary particle may be 0.1 to 2 µm, particularly 0.1 to 1.5 µm, and more particularly 0.1 to 1.0 µm.

If the average diameter (D50) of the primary particle falls outside the above range and is too small, agglomerative properties become larger, making it difficult to manufacture as large single particles, which is not preferable.

The average diameter (D50) of the primary particles can be measured by a process which includes cutting a cross section of the electrode using a FIB (Focused-in-Beam), then selecting secondary particles having the diameter of the secondary particle D50, imaging the cross section using an FE-SEM, and executing and mapping DX programs to obtain the average size of the primary particles.

The average diameter (D50) of the secondary particle may be 5 to 20 µm, particularly 5 to 15 µm, and more particularly 5 to 10 µm.

If the average diameter (D50) of the secondary particles falls outside the above range and is too small, the content of fine powder may increase, and if the average diameter (D50) is too large, the internal porosity of the particles may increase to cause a decrease in the particle strength, and the specific surface area may decrease to cause a deterioration in the output characteristics, which is not preferable.

Here, the "(average) diameters D10, D50 and D90" of the secondary particles means the particle diameters at 10%, 50% and 90% of the cumulative particle volume distribution according to the particle diameter of the active material in the electrode layer completing the rolling. In other words, D10, D50 and D90 are the particle diameters at 10%, 50% and 90% of the cumulative particle volume distribution according to the particle diameter.

The D10, D50 and D90 may be measured using a laser diffraction method. Specifically, the particle size distribution may be determined by a process which includes dispersing the powder to be measured in a dispersion medium, then introducing it into a commercially available laser diffraction particle size measurement device (e.g., Microtrac S 3500), and measuring the difference in diffraction patterns according to the particle diamter when particles pass through a laser beam. The D10, D50 and D90 may be measured by calculating the particle diameters at points corresponding to 10%, 50%, and 90% of the cumulative particle volume distribution according to the particle diameter in the measuring device.

The powder to be measured may be applied by selecting the active material from the powder after rolling.

Further, the lithium-rich manganese-based oxide may have a monomodal structure containing a large particle having an average diameter (D50) of the secondary particle, or may have a bimodal structure in which a large particle and a small particles with an average diameter (D50) of 3 to 5 µm are mixed. Here, the bimodal structure may be one in which two D50 peaks are formed in the particle size distribution. In this case, the small particle may have a single particle or a secondary particle.

When the lithium-rich manganese-based oxide has a bimodal structure, the large particle and the small particle may be contained in a weight ratio of 50:50 to 90:10, particularly 60:40 to 80:20, and more particularly 65:35.

When the lithium-rich manganese-based oxide is a secondary particle in this way, the coating layer may be formed on both the surface of the primary particle and the surface of the secondary particle.

That is, the coating layer may be formed in such a manner that it is coated on the surface of the secondary particle and at the same time, is inserted into the interior through pores inside the particles so as to coat up to the surface of the primary particle. Therefore, the coating layer may be distributed within a thickness of 20 nm to 100 nm from the surface of the primary particle based on the primary particle, and more specifically, may be distributed within a thickness of 30 nm to 80 nm.

In addition, since the coating layer is also formed on the surface of the secondary particle, it may be distributed within a thickness of 3 µm or less from the surface of the secondary particle, and particularly, within a thickness of 1 µm to 3 µm, and more particularly, within a thickness of 1.5 µm to 2.5 µm.

Here, the expression "distributed within the thickness" means that the coating layer exists at or below a thickness selected within the numerical range. For example, the expression "distributed within a thickness of 1 µm to 3 µm" may mean being distributed within one value selected from the range, for example, being distributed within a thickness of 1 µm, or being distributed within a thickness of 2 µm, or being distributed within a thickness of 3 µm.

In this case, the thickness of the coating layer on the surface of the primary particle can be confirmed through XPS analysis. Specifically, the positive electrode active material powder was prepared in a dry room, and the positive electrode active material powder was loaded onto Al-core carbon tape, which was then placed in a chamber of an analytical device (Nexsa G2, ESCA_04, Thermo Fisher Scientific) using a VTM. A survey scan spectrum and a narrow scan spectrum were obtained while conducting a depth profile.

In this case, the depth profile was conducted for up to 3,000 seconds using monoatomic Ar ions. The thickness on the surface of the secondary particle was measured using SEM images.

Further, according to the present disclosure, the particle strength of the lithium-based active material having a Co-containing coating layer formed on the surface of the lithium-rich manganese-based oxide can be expressed as a particle breaking strength. At this time, the particle breaking strength of the lithium-based active material may be 1.4 mN to 2.0 mN, particularly 1.4 mN to 1.9 mN, and more particularly 1.5 mN to 1.8 mN.

That is, according to the present disclosure, it is possible to have improved particle breaking strength compared to the case where the particle breaking strength of lithium-rich manganese-based oxide without forming a Co-containing coating layer has a value within the range of about 1.0 mN to 1.4 mN.

Here, the particle breaking strength may be measured by a nano indentation device using a needle, based on a single secondary particle. In this case, the breaking strength means the maximum particle strength immediately before particle breakage within the elastic strain region.

Moreover, the roundness of the lithium-based active material may be 0.6 to 0.9, and more particularly, 0.7 to 0.8.

The roundness (r) means a value obtained according to the following Equation 1 with respect to the lithium-based active material on SEM photographs, and may be a value calculated by setting the number of particle parameters to 300 to 400 through clustering analysis of IAM (Image Analysis Management). [Equation 1] $Roundness : 4 \times Area \left(A\right) / π {{D}_{max}}^{2} ,$
wherein the standard deviation of the roundness may be about 0.05 to 0.1.

As a result, in the case of an electrode including the lithium-based active material, even though the lithium-based active material includes lithium-rich manganese-based oxide, it is possible to increase the particle strength due to the formation of a coating layer containing Co, thereby improving rolling characteristics.

Specifically, in the lithium-based active material according to the present disclosure, the content of the lithium-based active material particles with a diameter of 1 µm or less in the electrode layer may be 2.5 vol.% or less, particularly 2.47 vol.% or less, and more particularly 0.1 vol.% to 2 vol.%, based on the total volume of the lithium-based active material.

Here, the content of the lithium-based active material particles with a diameter of 1 µm or less is referred to as the "amount of fine powder", which can also be measured as a value after preparing the electrode layer, i.e., after forming an electrode slurry on the current collector, drying, and rolling it. In this case, the rolling is based on the amount of fine powder generated after rolling to ensure that the porosity of the electrode layer of the electrode according to the present disclosure is about 20 vol.% to 40 vol.%.

Specifically, the amount of fine particle is determined by rolling the electrode during its manufacturing process so that the porosity of the electrode layer is about 30 vol.%, separating the electrode layer from the electrode collector, and measuring the (average) diameter using the measurement method described above.

That is, according to the present disclosure, the particle strength is increased by forming a coating layer containing Co, and so it can be seen that it is possible to reduce the amount of fine powder generated compared to the case where it is not.

That is, the lithium-based active material according to the present disclosure exhibits improved particle strength, which may result in a decrease in fine powder due to breakage and an increase in secondary particles that maintain the roundness described below, so that it can ultimately exhibit the effect of easily achieving the target porosity of the electrode layer even with a smaller rolling load.

Meanwhile, in the electrode according to the present disclosure, the porosity of the electrode layer may be 20 to 40 vol.0%, and more particularly 25 to 35 vol.%.

If the porosity falls outside the above range and is too low, problems such as active material breakage may occur under high pressure, which is not preferable. If the porosity is too high, the electrode density becomes low, causing problems such as a decrease in capacity relative to volume, which is not preferable.

The porosity may be calculated by measuring the total volume of the electrode layer from the density and weight of each material included in the electrode layer, and then calculating the difference in volume obtained from the density and weight of the materials relative to the volume of the electrode layer.

As described above, when the electrode layer of the electrode is rolled at a target porosity, the particle breakage strength is high, and particle breakage due to rolling is significantly reduced, thereby improving rolling characteristics and achieving the effect of enhancing battery performance such as capacity and energy density through incorporation of specific content levels.

### Lithium Secondary Battery

On the other hand, according to another embodiment of the present disclosure, a lithium secondary battery comprising the electrode is provided.

Specifically, a lithium secondary battery may include an electrode assembly including a positive electrode, a negative electrode, and a separator interposed between the positive and negative electrodes, and an electrolyte.

The electrode according to the present disclosure may be specifically a positive electrode, and may have a structure in which an electrode layer is formed on one surface or both surfaces of a positive electrode current collector.

Therefore, the electrode layer may further include other cathode active materials in addition to the lithium-based active material, and may further include a conductive material, a binder, or other additives as needed.

The positive electrode current collector may generally have a thickness of 3 to 500 µm. The positive electrode current collector is not particularly limited as long as it has high conductivity without causing a chemical change in the battery, and for example, stainless steel, aluminum, nickel, titanium, fired carbon, or aluminum or stainless steel whose surface is treated with carbon, nickel, titanium, silver, or the like may be used. The current collector may have fine protrusions and depressions formed on a surface thereof to enhance adherence of a positive electrode active material. For example, the current collector may be used in various forms such as a film, a sheet, a foil, a net, a porous body, a foaming body, and a non-woven fabric structure.

The positive electrode active material is, in addition to the lithium-based active material, for example, a compound capable of reversible intercalation and deintercalation of lithium, and it may further include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤b≤0.1), or the like.

When the active material is a mixture of other positive electrode active materials in addition to the lithium-based active material, the lithium-based active material may be included in an amount of 80 wt.% or more, or 90 wt.% or more, based on the total weight of the active material.

The conductive material is a component for further improving the conductivity of the active material, and is not particularly limited as long as it has conductivity without causing a chemical change in the battery, and for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium secondary battery and further enhance output characteristics.

Typically, the conductive material may be included in an amount of 1 to 20 wt.%, or 1 to 15 wt.%, or 1 to 10 wt.%, based on the total weight of the electrode layer.

The binder is a component that assists in the bonding between the active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluorine rubber or the like. Mixtures or copolymers of two or more selected from these may also be used.

Typically, the binder may be included in an amount of 1 to 20 wt.%, or 1 to 15 wt.%, or 1 to 10 wt.% based on the total weight of the electrode layer.

In addition, other additives may further include, for example, a filler or the like as a component for inhibiting the expansion. The filler is not particularly limited as long as it can inhibit the expansion of the electrode without causing a chemical change in the corresponding battery, and examples thereof may include olefinic polymers such as polyethylene and polypropylene; fibrous materials such as glass fibers and carbon fibers, and the like.

The negative electrode has a structure in which a negative electrode layer is formed on one surface or both surfaces of a negative electrode current collector.

The negative electrode current collector may typically have a thickness of 3 to 500 µm. In addition, the negative electrode current collector is not particularly limited so long as it does not cause a chemical change in the corresponding battery and has conductivity, and an example thereof may be one selected from the group consisting of copper, stainless steel, aluminum, nickel, titanium, fired carbon, copper that is surface-treated with dissimilar metal, stainless steel that is surface-treated with dissimilar metal, and an aluminum-cadmium alloy. The current collector may have fine protrusions and depressions formed on a surface thereof to enhance adherence of a negative electrode active material, and may be used in various forms such as a film, a sheet, a foil, a net, a porous body, a foaming body, and a non-woven fabric structure.

The negative electrode layer may include a binder, a conductive material, and other additives as described for the positive electrode, along with a negative electrode active material.

The negative electrode active material may include at least one carbon-based material selected from the group consisting of graphite, amorphous hard carbon, low-crystalline soft carbon, carbon black, acetylene black, Ketjen black, super P, graphene and fibrous carbon; Si-based materials; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

The separator may be composed of polymer substrate, or may be a safety reinforced separator (SRS) in which a coating layer containing binding materials and inorganic particles is formed on one surface or both surfaces of the polymer substrate.

The polymer substrate may be, for example, a polyolefin-based substrate. The polyolefin-based substrate may be used in the form of a sheet, multilayer membrane, microporous film, woven fabric, or nonwoven fabric, but is not necessarily limited thereto. The polyolefin-based substrate may be a thin insulating film with high ion permeability and mechanical strength. The pore diameter of the separator may generally be in the range of 0.01 to 10µm, and the thickness may generally be in the range of 5 to 300µm, but is not limited thereto.

The polymer substrate of the SRS separator may be the polyolefin substrate.

The inorganic particle of the coating layer makes it possible to form an empty space between inorganic particles, and plays a role to form a fine porosity and also serves as a spacer capable of maintaining a physical form. Further, the inorganic particles generally have a feature of not having a physical property changed even at a high temperature of 200°C or higher, and thus the organic-inorganic mixed layer formed comes to have an excellent thermal resistance.

The inorganic particles are not particularly limited, as long as they are electrochemically stable. In other words, the inorganic particles which may be used in the present disclosure are not particularly limited, unless they cause an oxidation and/or reduction reaction in a working voltage range of a battery to be applied. In particular, in case of using an inorganic particle having an ion transfer capacity, an ionic conductance in electrochemical elements may be increased to improve a performance, and thus the one having a high ion conductance is preferable. Further, if the inorganic particle has a high density, it is difficult to disperse such particles during manufacturing and there is a problem of increasing a weight when manufacturing a battery. Thus, the one having a small density is preferable, if possible. In addition, an inorganic material having a high dielectric constant contributes to an increase in a degree of dissociation of electrolytic salt in liquid electrolyte, e.g., lithium salt, thereby improving the ion conductivity of the electrolyte. Finally, inorganic particles having thermal conductivity are more preferable because they have excellent heat absorbing ability and therefore inhibit the phenomenon in which heat is concentrated locally to form a heat generation point, leading to thermal runaway.

For the reasons mentioned above, the inorganic particle is preferably one or more selected from the group consisting of (a) a high-dielectric constant inorganic particle having a dielectric constant of 1 or more, 5 or more, preferably 10 or more, (b) an inorganic particle having piezoelectricity, (c) a thermal conductive inorganic particle, and (d) an inorganic particle having a lithium ion transfer ability.

The inorganic particle having piezoelectricity means a material which is a non-conductor at atmospheric pressure, but which has an electrified property due to a change in an internal structure when a certain pressure is applied. Such inorganic particle exhibits a high dielectric characteristic, in which a dielectric constant is 100 or more. If such inorganic particle is tensioned or compressed upon the application of a certain pressure, electric charges are generated to respectively charge one side positively and the other side negatively. Thus, such particle is a material which has a function of causing a potential difference between both sides.

Examples of the inorganic particle having piezoelectricity include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) hafnia (HfO₂), a mixture thereof or the like, but are not limited thereto.

The inorganic particle having the lithium ion transfer capacity refers to an inorganic particle which has a function of containing a lithium element, but not storing lithium to move a lithium ion. The inorganic particle having the lithium ion transfer capacity may transfer and move a lithium ion due to a kind of defects present inside a structure of particle. Thus, such particle may prevent a decrease in lithium mobility, thereby preventing a decrease in a battery capacity.

Examples of the inorganic particle having the lithium ion transfer capacity include: (LiAlTiP)ₓO_{y}-based glass (0<x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), 14Li₂O-9Al₂O₃-38TiO₂-39P₂O₅, etc.; lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) Li_{3.25}Ge_{0.25}P_{0.75}S₄, etc.; lithium nitride (LiₓN_{y}, 0<x<4, 0<y<2) such as Li₃N, etc.; SiS₂-based glass (LiₓSi_{y}S_{z}, 0<x<3, 0<y<2, 0<z<4) such as Li₃PO₄-Li₂S-SiS₂, etc.; P₂S₅-based glass (LiₓP_{y}S_{z}, 0<x<3, 0<y<3, 0<z<7) such as LiI-Li₂S-P₂S₅, etc.; a mixture thereof; or the like, but are not limited thereto.

Further, examples of the inorganic particle having a dielectric constant of 1 or more include SrTiO₃, SnO₂, CeO₂, MgO, NiO, CaO, ZnO, ZrO₂, Y₂O₃, Al₂O₃, TiO₂, SiC, a mixture thereof or the like, but are not limited thereto.

The thermal conductive inorganic particle is a material which provides low thermal resistance but no electrical conductivity and thus have insulation properties, and may be, for example, at least one selected from the group consisting of aluminum nitride (AlN), boron nitride (BN), alumina (Al₂O₃), silicon carbide (SiC), and beryllium oxide (BeO), but are not limited thereto.

In case of using the above-described high dielectric inorganic particle, the inorganic particle having piezoelectricity, the thermal conductive inorganic particle and the inorganic particle having the lithium ion transfer capacity together, a synergy effect thereof may be doubled.

A size of the inorganic particle is not limited, but it is preferable that the size thereof is in a range of 0.001 to 10 *µ*m, if possible, in order to form an appropriate porosity between the inorganic particles. If such size is less than 0.001 *µ*m, dispersibility is deteriorated and thus it becomes difficult to control a physical property. If such size is more than 10 *µ*m, a thickness is increased to degrade the mechanical property and also the coating layer does not fulfill a role thereof due to an excessively large pore size, but increases a chance of causing an internal short circuit while charging and discharging a battery.

A content of the inorganic particle is not particularly limited, but it is preferable that such content is in a range of 1 to 99 wt.%, more preferably in a range of 10 to 95 wt.% per 100 wt.% of a mixture of an inorganic particle and a binding material. If the content thereof is less than 1 wt.%, the content of binding material becomes excessively large to decrease a pore size and a porosity due to a decrease in empty space formed between inorganic particles, and thus mobility of lithium ion may be deteriorated. In contrast, if the content thereof is more than 99 wt.%, the content of binding material becomes excessively small to deteriorate a mechanical property of the coating layer due to a weakened adhesive strength between inorganic materials.

On the other hand, the binding material is not limited, unless it causes a side reaction with the electrolyte. In particular, the binding material may be one of which a glass transition temperature (Tg) is as low as possible, preferably in the range of -200 to 200°C. This is because such binding material may improve the mechanical properties of a final insulating film.

Further, the binding material does not need to have ion conduction capacity, but it is more preferable to use a polymer having ion conduction capacity.

Thus, it is preferable that the binding material has a high dielectric constant. Indeed, a degree of dissociation of salt in an electrolyte depends on the dielectric constant of an electrolytic solvent. As the dielectric constant of the polymer increases, the degree of dissociation of salt in the electrolyte may be improved. The dielectric constant of the polymer used may be 1 or more, particularly in a range of 1.0 to 100 (measurement frequency=1 kHz), and preferably 10 or more.

In addition to the functions described above, the binding material may have a feature of being gelled to show a high degree of swelling with an electrolytic solution, when being impregnated into the liquid electrolytic solution. Indeed, if the binding material is a polymer having an excellent degree of swelling with an electrolytic solution, the electrolytic solution injected after assembling of a battery permeates the polymer, and the polymer retaining the absorbed electrolytic solution comes to have an ion conduction capacity for the electrolyte. Thus, if possible, a solubility index of the polymer is preferably in a range of 15 to 45 MPa^{1/2}, more preferably in a range of 15 to 25 MPa^{1/2} and 30 to 45 MPa^{1/2}. If the solubility index is less than 15 MPa^{1/2} or more than 45 MPa^{1/2}, it becomes difficult to have swelling with the liquid electrolytic solution for a conventional battery.

Examples of the binding material may be one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, and polyvinyl alcohol.

The total thickness of the separator may be 5 micrometers to 20 micrometers, particularly 5 micrometers to 15 micrometers, more particularly 6 micrometers to 13 micrometers. When the thickness of the separator satisfies the above range, it is possible to effectively prevent short circuits between the positive and negative electrodes while minimizing the resistance of the lithium secondary battery. As a result, it is possible to prevent a decrease in the energy density of the lithium secondary battery and improve the lifetime characteristics.

The electrolyte may be a lithium non-aqueous electrolyte, and the lithium non-aqueous electrolyte may include a lithium salt and a non-aqueous organic solvent.

In this case, the lithium salt is used as a medium for transferring ions within a lithium secondary battery. The lithium salt may include Li⁺ as a cation, and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ , as an anion.

Specifically, the lithium salt may include one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), or a mixture of two or more of them. However, in terms of excellent stability, it includes preferably LiN(SO₂CF₃)₂.

In addition to these, lithium salts commonly used in electrolytes of lithium secondary batteries can be used without limitation.

The concentration of the lithium salt can be appropriately changed within a generally usable range, but the lithium salt may be included in the electrolyte at a concentration of 0.5M to 3M, particularly at a concentration of 1M to 2.5M, and more particularly at a concentration of 1M to 2.5M, in the electrolyte in order to obtain an optimal effect of forming a film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, thereby capable of improving electrolyte wetting property.

The non-aqueous organic solvent is not limited as long as it can minimize decomposition due to an oxidation reaction or the like in the voltage range of the charge/discharge process of the lithium secondary battery, and can exhibit its properties together with a material. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, a low dielectric constant linear carbonate-based compound such as dimethyl carbonate and diethyl carbonate and a linear ester-based compound, in an appropriate ratio, an electrolyte having high electrical conductivity may be prepared, which may be more preferably used.

Moreover, the lithium non-aqueous electrolyte further comprise a functional additive. The functional additive may be included to prevent the induction of breaking of the negative electrode in a high power environment, or to further improve low-temperature high-rate discharge characteristics, high-temperature stability, overcharge prevention, swelling improvement effect during high-temperature storage, and the like.

Specifically, a representative example of the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone (PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and particularly 1 wt.% to 5 wt.% based on the total weight of the electrolyte. When the amount of the sultone-based compound in the electrolyte is more than 5 wt.%, an excessively thick layer may be formed on the surface of the electrode to cause an increase in resistance and a degradation of output, and resistance due to the excessive amount of the additive may also be increased to degrade output characteristics.

The sulfite-based compound may include at least one compound selected from the group consisting of ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite, and may be included in an amount of 3 wt.% or less based on the total weight of the electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the electrolyte.

The sulfate-based compound may include ethylene sulfate(Esa), trimethylene sulfate (TMS), or methyl trimethylene sulfate (MTMS), and may be included in an amount of 3 wt.% or less based on the total weight of the electrolyte.

Further, the halogen-substituted carbonate-based compound may include fluoroethylene carbonate (FEC), and may be included in an amount of 5 wt.% or less based on the total weight of the electrolyte. When the amount of the halogen-substituted carbonate-based compound in the electrolyte is more than 5 wt.%, cell swelling performance may be degraded.

Further, the nitrile-based compound may include at least one compound selected from the group consisting of succinonitrile, adiponitrile (Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the electrolyte. When the content of the cyclic carbonate-based compound in the electrolyte is more than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl) phosphate, and tris(2,2,2-trifluoroethyl)phosphite, and may be included in an amount of 3 wt.% or less based on the total weight of the electrolyte.

The borate-based compound may include lithium oxalyldifluoroborate, and may be included in an amount of 3 wt.% or less based on the total weight of the electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate (LiB(C₂O₄)₂) and LiBF₄, and may be included in an amount of 3 wt.% or less based on the total weight of the electrolyte.

Two or more kinds of the functional additives may be mixed, and included in an amount of 20 wt.% or less, particularly 0.1 wt.% to 10 wt.%, based on the total weight of the lithium non-aqueous electrolyte. When the content of the functional additive is more than 20 wt.%, there is a possibility that excessive side reactions in the lithium non-aqueous electrolyte may occur during charge and discharge of the battery. In particular, it is not sufficiently decomposed at high temperatures, and may exist as an unreacted material or in a precipitated state in an electrolyte at room temperature. Thereby, side reactions may occur in which the lifetime or resistance characteristics of the lithium secondary battery are reduced.

Hereinafter, embodiments of the present disclosure will be described with reference to examples to demonstrate advantage effects of the invention.

### <Example 1> (Co content: 6600 ppm)

### Synthesis of lithium-rich manganese-based oxide

A transition metal precursor (Ni_{0.304}Mn_{0.565}(OH)₂) and a lithium precursor were mixed so that the molar ratio of transition metal (Ni + Mn) to Li was 1:1.13, and the mixture was fired at 850°C in an oxygen atmosphere (50% oxygen content) to prepare a lithium-rich manganese-based oxide (Li_{1.13}Ni_{0.304}Mn_{0.565}O₂).

### Formation of surface layer

After preparing the above-described lithium-rich manganese-based oxide (Li_{1.13}Ni_{0.304}Mn_{0.565}O₂), Co metal was coated on its surface. Specifically, the lithium-rich manganese-based oxide was mixed with Co₃O₄, and heat-treated at 500°C for 8 hours to prepare a lithium-rich manganese-based oxide having a Co-containing coating layer formed thereon.

### <Example 2> (Co content: 3300 ppm)

A positive electrode active material was prepared in the same manner as in Example 1, except that the Co content was set to 3300 ppm.

### <Comparative Example 1>

The lithium-rich manganese-based oxide prepared in Example 1 was used as the positive electrode active material, without being coated with Co.

### <Comparative Example 2> (Co content: 9900 ppm)

A positive electrode active material was prepared in the same manner as in Example 1, except that the Co content was set to 9900 ppm.

### <Experimental Example 1>

XPS evaluation was performed on the positive electrode active materials prepared in Examples 1 and 2 to examine the formation tendency of the Co coating layer. Specifically, the positive electrode active material powder was prepared in a dry room, and the positive electrode active material powder was loaded onto Al-core carbon tape, which was then placed in a chamber of an analytical device (Nexsa G2, ESCA_04, Thermo Fisher Scientific) using a VTM. A survey scan spectrum and a narrow scan spectrum were obtained while conducting a depth profile.

At this time, the depth profile was conducted for up to 3000 seconds using monoatomic Ar ions.

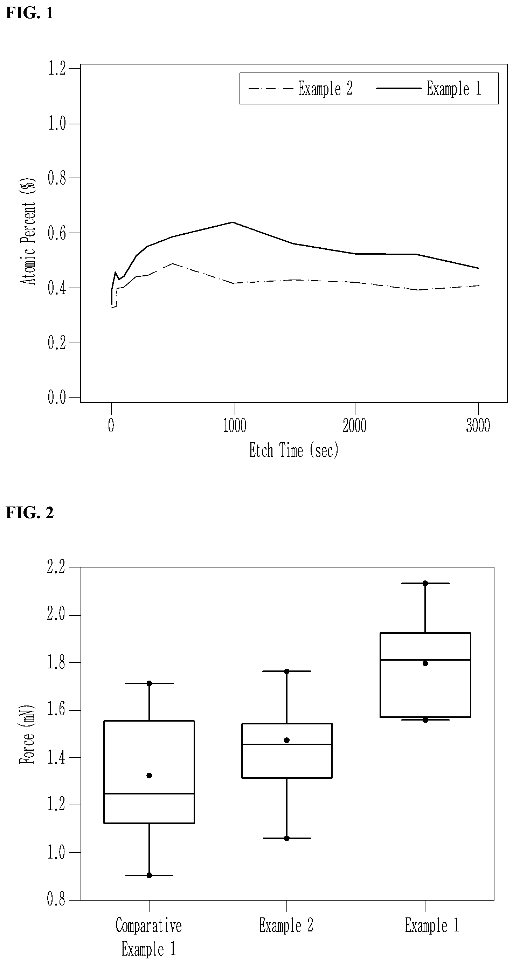

The results are shown in Figure 1 below, where the percentage (%) indicates the atomic percent (at%) of Co relative to all elements.
- X-ray source: monochromatic Al Ka(1486.6eV)
- X-ray spot size: 400*µ*m
- Sputtering: Ar monatomic (ion energy: 1kV, current: low, raster width: 2mm)
- Etching rate: 0.13nm/sec based on Ta₂O₅
- Survey scan: pass energy 200eV, energy step 1eV
- Narrow scan: scanned mode, pass energy 50eV, energy step 0.1eV

Referring to Figure 1, it can be confirmed that both the positive electrode active materials of Examples 1 and 2 were coated with Co up to the inside of the particles. However, it was confirmed that as the etching time increases, the atomic percentage gently increases, and then after 1000 seconds, Example 1 gently decreases, while Example 2 maintains slightly constant. It can be confirmed that in Example 1, which has a higher content than Example 2, the maximum content is high and the time at which the maximum content appears is later. However, it can be seen that the Co element partially diffused up to the inside of the active material, slightly more deeply in the thickness direction than the thickness of a coating layer typically coated.

### <Experimental Example 2>

The particle breaking strength of the positive electrode active materials prepared in Examples 1, 2, and Comparative Example 1 was measured, and the results are shown in Figure 2 below.

The particle breaking strength was measured by a nano-indentation device using a needle for each secondary particle. At this time, the breaking strength means the maximum particle strength immediately before particle breakage within the elastic strain region.

Referring to Figure 2, it can be seen that when a Co coating layer is formed according to the present disclosure, the particle breaking strength increases. Meanwhile, it can be seen that as the Co content in the coating layer increases, the particle breaking strength further increases, and when the Co content is 6,000 ppm or more, the particle breaking strength increases significantly.

### <Experimental Example 3>

Using the positive electrode active materials prepared in Examples 1, 2, and Comparative Example 1, respectively, the positive electrode active material, the binder (PVdF), and the conductive material (FX35, Denka) were mixed in NMP (N-methylpyrrolidone) at a weight ratio of 96.25:2.1:1.65 to prepare a positive electrode slurry. The positive electrode slurry was applied to a 20-µm thick aluminum foil to a thickness of 50 *µ*m, dried at 130°C, and rolled to a porosity of about 30 vol.%, to prepare a positive electrode. The porosity was measured in real time during the rolling process.

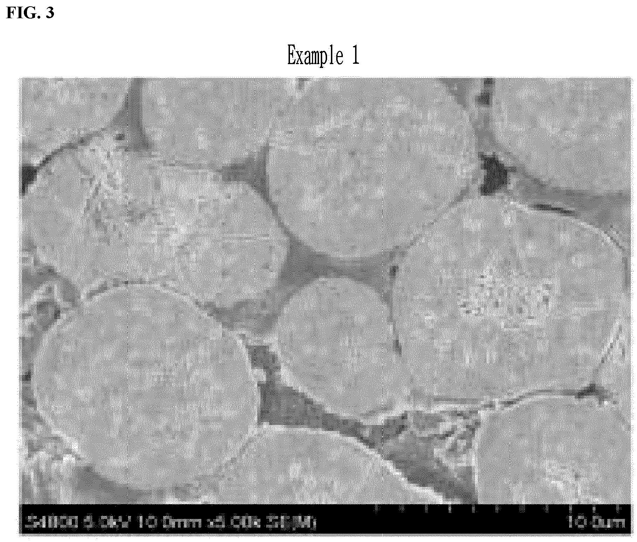

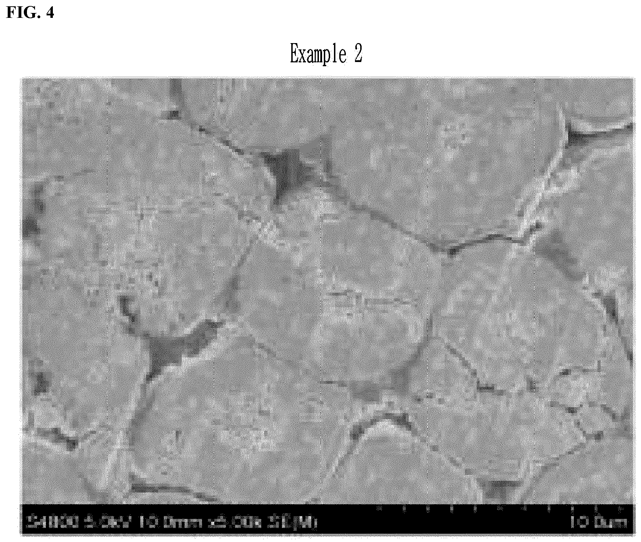

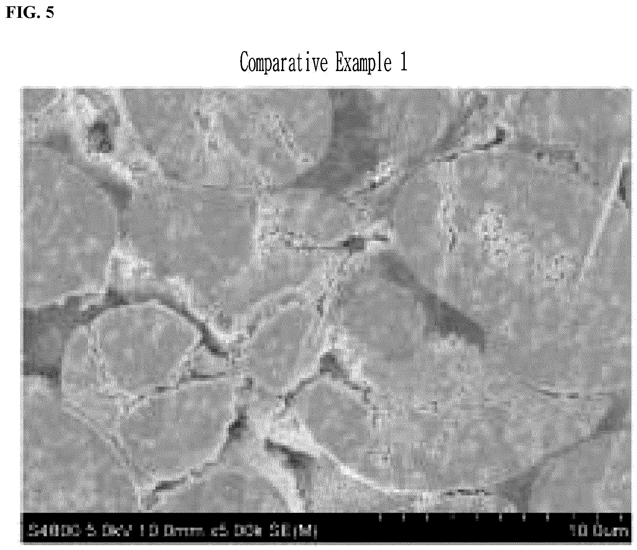

SEM photographs of the surface of the positive electrode produced as described above were taken and are shown in Figures 3 to 5.

Referring to Figures 3 to 5, it can be confirmed that in Comparative Example 1 where no Co coating layer was formed, a large amount of breakage occurred in the active material particles, whereas in Examples 1 and 2 where a Co coating layer was formed, particle breakage was reduced, and in Example 1 where the Co content was 6,000 ppm or more, particle breakage is nearly non-existent, resulting in a significant decrease.

### <Experimental Example 4>

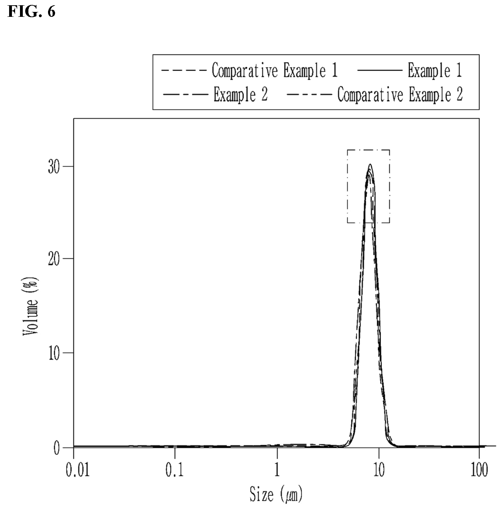

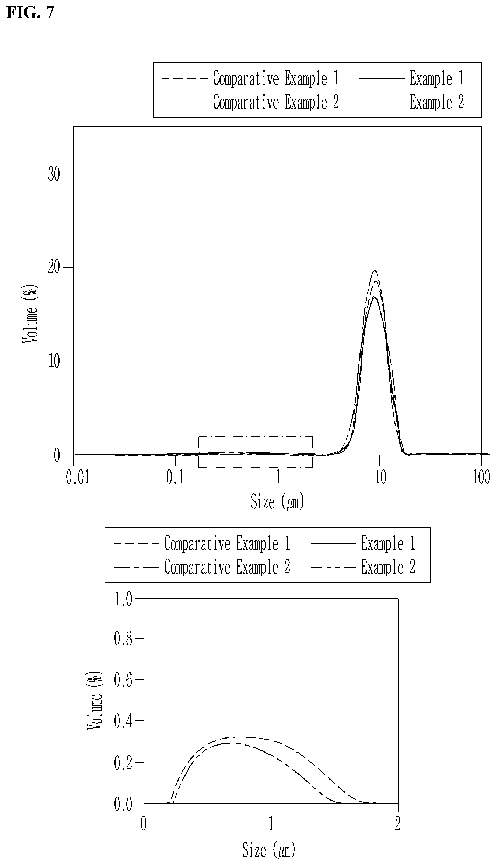

The particle distribution of the positive electrode active materials prepared in Examples 1 and 2 and Comparative Examples 1 and 2 was measured, and the positive electrode was prepared in the same manner as in Experimental Example 3. The current collector was then removed from the positive electrode, the electrode layer was milled, and the positive electrode active material was selected. The particle distribution was then measured again. The results are shown in Figures 6 and 7, and summarized in Table 1.

Specifically, the particle distribution was measured using a laser diffraction method. Specifically, the particle size distribution was determined by a process which includes dispersing the powder to be measured in a dispersion medium, then introducing it into a commercially available laser diffraction particle size measurement device (e.g., Microtrac S 3500), and measuring the difference in diffraction patterns according to particle size when particles pass through a laser beam.

**[Table 1]**

| | | Example 1 | Example 2 | Comparative Example 1 | Comparative Example 2 |
|---|---|---|---|---|---|
| PSD(bare) | D10(*µ*m) | 7.1 | 7.1 | 7.1 | 7.1 |
| | D50(*µ*m) | 8.7 | 8.7 | 8.7 | 8.7 |
| | D90(*µ*m) | 10.8 | 10.8 | 10.8 | 10.8 |
| PSD(after rolling) | D10(*µ*m) | 6.34 | 6.72 | 6.38 | 6.35 |
| | D50(*µ*m) | 9.23 | 9.36 | 9.23 | 9.23 |
| | D90(*µ*m) | 13.1 | 12.6 | 12.7 | 13.0 |
| Amount of fine powder (<1*µ*m) | Vol.% | 0 | 2.47 | 2.95 | 0 |

Referring to Table 1 together with FIGS. 6 and 7 below, it can be confirmed that the positive electrode active materials of Examples 1 and 2 and Comparative Examples 1 and 2 had similar particle size distributions before forming the positive electrode, however, when examined after preparing the positive electrode, the content of fine powder of less than 1 µm was remarkably reduced due to the Co coating.

### <Experimental Example 5>

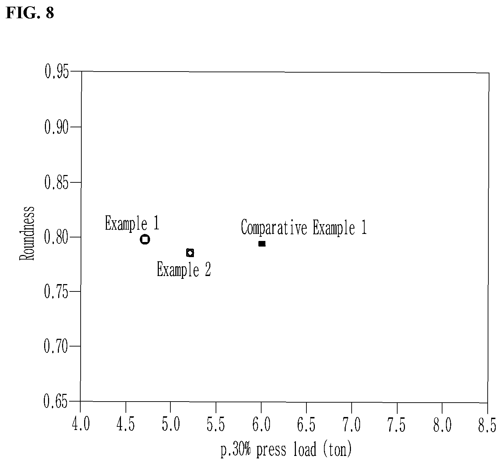

In the positive electrodes prepared according to Experimental Example 3, the roundness of the positive electrode active material within the electrode layer was measured for Examples 1 and 2 and Comparative Example 1, and the results are shown in Table 2 and Figure 8.

Here, the roundness is a value obtained according to the following Equation 1 with respect to the lithium-based active material on SEM photographs of the electrode layer, and may be a value calculated by setting the number of particle parameters to 300 to 400 through clustering analysis of IAM (Image Analysis Management). [Equation 1] $Roundness : 4 x Area \left(A\right) / {{πD}_{max}}^{2}$

In addition, to demonstrate that the rolling load is substantially reduced in accordance with the present disclosure, the positive electrode active material powders prepared in Examples 1 and 2 and Comparative Example 1 were rolled to a porosity of 30%, and the rolling loads when the porosity was reached were measured, and are shown in Table 2 below.

The rolling load was evaluated by collecting 3 g of active material powder as a sample and setting the internal porosity of the powder to a constant condition (30%) for the sample.

The rolling load was measured by a process that includes setting a target density based on the true density information of the active material, setting a gap gauge at the upper end of a cylindrical mold so as to achieve the target volume based on the weight (3g) of the active material powder, placing the active material powder therein, adjusting the setup so that upon reaching the target height, the target would not decrease any further, and measuring the load.

**[Table 2]**

| | Roundness | Standard deviation | Load (ton) required to reach about 30% porosity in active material powder |
|---|---|---|---|
| Example 1 | 0.798 | 0.08 | 4.7 |
| Example 2 | 0.786 | 0.07 | 5.2 |
| Comparative Example 1 | 0.793 | 0.07 | 6.0 |

Referring to Table 2 and Figure 8, it can be confirmed that when a Co coating layer is formed and when it is not, the roundness is similarly about 0.7 to 0.8 in both cases.

On the other hand, it can be confirmed that when even active materials with the same roundness were rolled to have the same porosity, the rolling load was reduced when using the positive electrode active material according to the present disclosure. This is expected to be because the particle breaking strength is improved.

### <Experimental Example 6>

Lithium secondary batteries were manufactured using the positive electrode active materials of Examples 1 and 2 and Comparative Examples 1 and 2.

Specifically, the positive electrode active material, the binder (PVdF), and the conductive material (CNT) were mixed in NMP (N-methylpyrrolidone) at a weight ratio of 96:3:1 to prepare a positive electrode slurry. The positive electrode slurry was then applied to a 20-µm thick aluminum foil to a thickness of 40 µm, then dried at 130°C and rolled to prepare a positive electrode.

Artificial graphite was used as the negative electrode active material, and the negative electrode active material, the conductive material (CNT), styrene-butadiene rubber (SBR) as the binder, and carboxymethyl cellulose (CMC) as the additive were mixed in water at a weight ratio of 96.2:0.8:2:1 to prepare a negative electrode slurry. The negative electrode slurry was then coated on an 8-*µ*m thick Cu foil to a thickness of 30*µ*m, dried at 130°C, and rolled to prepare a negative electrode.

A separator having organic/inorganic coating layers (Al₂O₃ and PVDF were mixed in a weight ratio of 90:10) formed on both surface of a polypropylene (PP) substrate was interposed between the positive electrode and the negative electrode to prepare an electrode assembly.

A pouch-type lithium secondary battery was manufactured using the electrode assembly and an electrolyte (100 mL) containing 1 M LiPF₆ in a solvent with an EC:EMC ratio of 3:7.

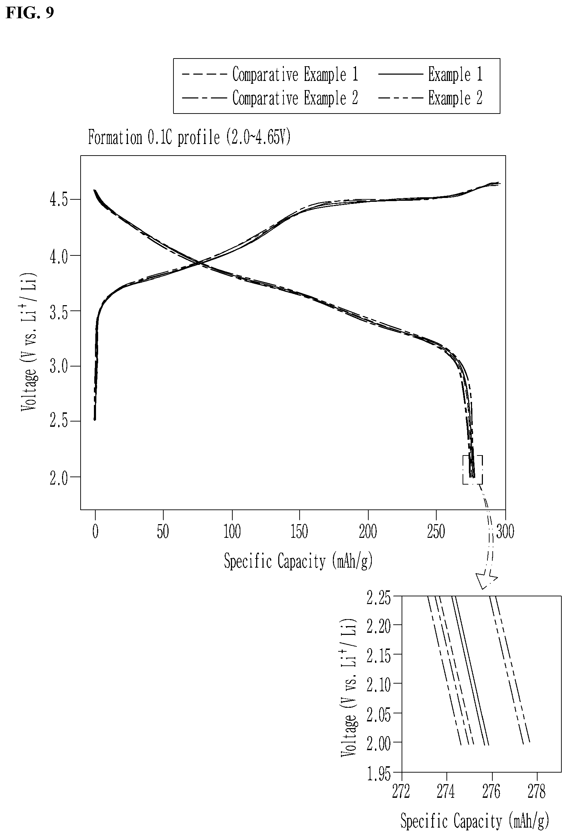

The lithium secondary battery was charged up to 4.6 V at 0.1 C (CC/CV mode) at 25°C and then discharged up to 2.0 V at a constant current of 0.1 C (CC mode). Through this process, charging and discharging were performed once and activated to manufacture the lithium secondary battery. In this case, the charge capacity, discharge capacity, and discharge efficiency (charge capacity vs. discharge capacity) were measured, and the results are shown in Figure 9 and Table 3.

**[Table 3]**

| | Charge (mAh/g) | Discharge (mAh/g) | Efficiency (%) |
|---|---|---|---|
| Example 1 | 295.3 | 276.1 | 93.5 |
| Example 2 | 295.3 | 277.4 | 93.9 |
| Comparative Example 1 | 296.1 | 275.3 | 93.0 |
| Comparative Example 2 | 294.8 | 274.8 | 93.2 |

Referring to Figure 9 and Table 3, it can be confirmed that the discharge efficiency was high when the Co coating amount was 3,300 ppm and 6,600 ppm.

### <Experimental Example 7>

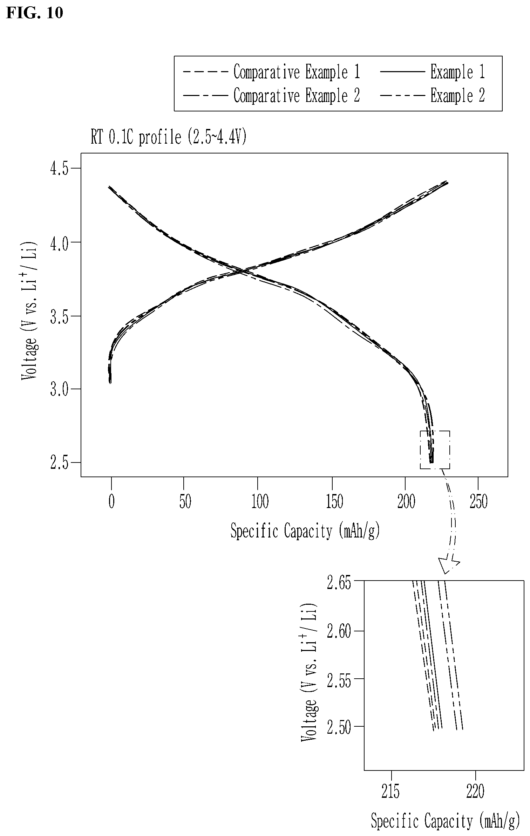

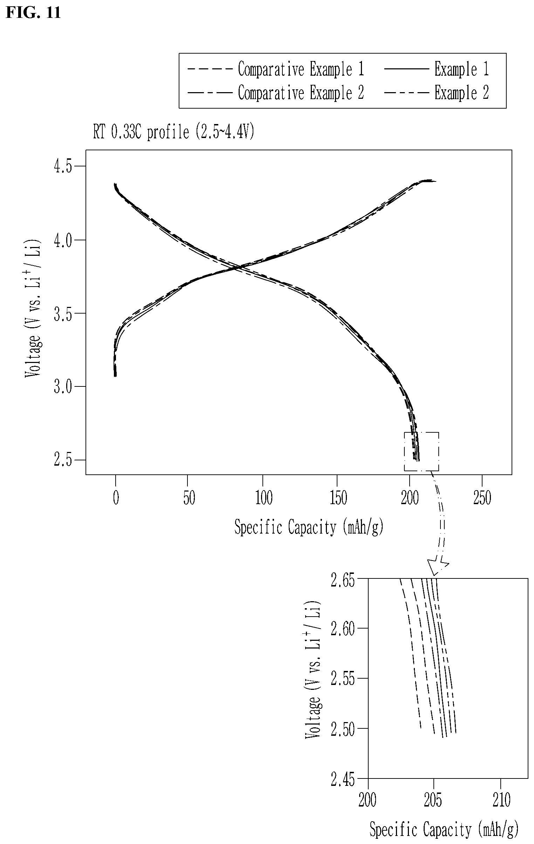

The lithium secondary battery activated in Experimental Example 6 were charged up to 4.6 V at 0.1 C (CC/CV mode) at 25°C and then discharged up to 2.0 V at a constant current of 0.1 C (CC mode). Through this process, charging and discharging were performed at a constant current of 0.33 C within the above range, and the results are shown in Figures 10 and 11 and Table 4 below.

The energy density was also calculated, and the results are shown in Figures 10 and 11 and Table 4 below.

The energy density was calculated as follows:
- Energy density: Calculated as the product of the 0.33 C discharge capacity and the 0.33 C average discharge voltage.

**[Table 4]**

| | 0.1C discharge capacity (mAh/g) | 0.33 discharge capacity (mAh/g) | Energy density (Wh/Kg) |
|---|---|---|---|
| Example 1 | 218.0 | 206.0 | 757.9 |
| Example 2 | 219.0 | 206.2 | 759.0 |
| Comparative Example 1 | 217.5 | 204.3 | 754.1 |
| Comparative Example 2 | 217.3 | 205.8 | 756.5 |

Referring to Figure 10 and Table 4, it can be confirmed that when the Co coating amount is 3,300 ppm to 6,600 ppm, the discharge capacity and energy density are high.

Based on the above disclosure, various applications and modifications can be carried out by those of ordinary skill in the art without deviating from the spirit and scope of the present disclosure.

### [Industrial Applicability]

According to the present disclosure, a coating layer containing a specific amount of Co is formed on a lithium-rich manganese-based oxide with a high manganese (Mn) content, which can increase the breaking strength of the active material particles and thus prevent breakage of the active material particles even at the time of rolling an electrode containing the samel. As a result, it is possible to reduce the amount of fine powder with a diameter of 1 µm or less and thus reduce the rolling load during rolling while targeting the same porosity, thereby exhibiting the effect of improving rolling characteristics.

In addition, if the rolling characteristics is improved, the processability of the electrode can be enhanced, and if the specific Co content is satisfied, the rolling characteristics can be improved and also the performance such as the capacity and energy density of the lithium secondary battery can be improved.

## Claims

1. An electrode for a secondary battery, comprising an electrode current collector, and an electrode layer formed on one surface or both surfaces of the electrode current collector,
wherein the electrode layer comprises a lithium-based active material including a lithium-rich manganese-based oxide in which a molar ratio of lithium to a transition metal excluding lithium is more than 1 and a molar content of manganese in the transition metal is 50 mol% or more; and a coating layer formed on the surface of the lithium-rich manganese-based oxide, and
wherein the coating layer contains Co in an amount of 3,000 ppm to 8,000 ppm based on the total weight of the lithium-based active material.

2. The electrode according to claim 1,
wherein the Co content of the coating layer is 3300 ppm to 6600 ppm based on the total weight of the lithium-based active material.

3. The electrode according to claim 1,
wherein the coating layer comprises one or more materials selected from the group consisting of Co metal, Co oxide, and lithium cobalt oxide.

4. The electrode according to claim 1,
wherein the lithium-rich manganese-based oxide is represented by the following Formula 1.
[Formula 1] LiₐNi_{b}Co_{c}Mn_{d}MₑO_{2+f}
wherein, 1.12≤a≤1.18, 1.1≤a/(b+c+d)≤1.5, 0.24≤b≤0.36, 0≤c≤0.1, 0.47≤d<0.63, 0≤e≤0.05, 0≤f≤0.05, b+c+d+e=1, and M is at least one selected from the group consisting of Al, B, Co, Fe, Cr, Cu, W, Mg, V, Ti, Zn, Ga, In, Ru, Nb, Sn, Sr and Zr.

5. The electrode according to claim 1,
wherein the lithium-rich manganese-based oxide is a secondary particle having a structure in which primary particles are agglomerated, and the coating layer is formed on both a surface of the primary particle and a surface of the secondary particle.

6. The electrode according to claim 5,
wherein the coating layer is distributed within a thickness of 20 nm to 100 nm from the surface of the primary particle based on the primary particle.

7. The electrode according to claim 5, wherein the coating layer is distributed within a thickness of 3 µm or less from the surface of the secondary particle based on the secondary particle.

8. The electrode according to claim 5,
wherein the average diameter (D50) of the secondary particle is 5 to 10 µm.

9. The electrode according to claim 1,
wherein the content of particles of the lithium-based active material having a diameter of 1 µm or less in the electrode layer is 2.5 vol.% or less based on the total volume of the lithium-based active material.

10. The electrode according to claim 1,
wherein the particle breaking strength of the lithium-based active material is 1.4 mN to 2.0 mN.

11. The electrode according to claim 1,
wherein the roundness of the lithium-based active material is 0.7 to 0.8.

12. The electrode according to claim 1,
wherein the porosity of the electrode layer is 20 to 40 vol.%.

13. A lithium secondary battery comprising the electrode according to claim 1.
